# EUROPÄISCHE PATENTANMELDUNG

(11) **EP 2 441 570 A2**
(43) Veröffentlichungstag der Anmeldung: **18.04.2012**
(21) Anmeldenummer: 11008196.5
(22) Anmeldetag: 11.10.2011
(51) Int. Cl.: B29C 65/18, B65B 51/14, B65B 31/02, B65B 51/32

(54) **Verfahren und Kammermaschine zum Versiegeln von Verpackungsmaterial**

(30) Priorität: 13.10.2010 DE 102010048401
(71) Anmelder: MULTIVAC Sepp Haggenmüller GmbH & Co KG, 87787 Wolfertschwenden (DE)
(72) Erfinder: Miller, Dietmar, 87781 Ungerhausen (DE)
(74) Vertreter: Grünecker, Kinkeldey, Stockmair & Schwanhäusser

(57) **Zusammenfassung**

Die Erfindung bezieht sich auf ein Verfahren zum Versiegeln von Verpackungsmaterial (6) und eine Kammermaschine oder Kammerbandmaschine (1) zur Durchführung des Verfahrens zum Vorwärmen wenigstens einer Siegelschiene (9) auf eine erste Temperatur (T1), um im Siegelbereich (12) vorhandene flüssige, vorzugsweise wasserhaltige, Produktanteile (11) vor dem Versiegeln entweichen zu lassen.

## Beschreibung

Die Erfindung bezieht sich auf ein Verfahren zum Versiegeln von Verpackungsmaterial, vorzugsweise einen Beutel, gemäß Anspruch 1 sowie auf eine Kammermaschine oder Kammerbandmaschine zum Durchführen des Verfahrens.

Aus dem Stand der Technik sind Kammermaschinen und Kammerbandmaschinen bekannt, die unter Vakuum und/oder modifizierter Atmosphäre Kunststoffbeutel versiegeln. Dabei kann der Bediener die Siegelzeit, die Siegeltemperatur und den Zeitpunkt als Funktion des eingestellten Unterdrucks in der Kammer vorgeben. Der Anpressdruck der Siegelschiene auf eine Gegendruckleiste für den Siegelprozess ist dabei ausreichend vorhanden und wird über einen Druckminderer eingestellt. Eine Regelung während das Evakuier- und Siegelprozesses ist nicht vorgesehen.

In der DE 19815763 C2 ist ein Verfahren offenbart, um das Ablösen des Beutels von der Siegelschiene nach dem Siegeln zu verbessern, indem die Siegelschiene zu einem zweiten Zeitpunkt nach dem Siegeln auf eine zweite Temperatur, die oberhalb der Siegeltemperatur liegt, erwärmt wird.

In der Praxis kommt es bei besonderen Kombinationen von der Materialeigenschaft des Beutels und dem Produkt und seiner vorgesehenen Verwendung zu Anforderungen, die mit den bekannten Lösungen nicht in ausreichender Qualität ausgeführt werden können und eine ausreichende Prozesssicherheit nicht gegeben ist.

Beispielsweise tritt dies auf beim Verpacken von Produkten auf, die eine wässrig benetzte Oberfläche aufweisen, z.B. ganze Hühnchen, die mit einer wasserhaltigen Marinade eingerieben sind. Oftmals werden die Produkte in sogenannten "kochfesten" Beuteln verpackt, die in diesem Fall eine hohe Temperaturbeständigkeit für Temperaturen von über 200 °C oder mehr besitzen.

Dies führt zu einem gegenüber den üblichen Kunststoffbeuteln sehr engen Siegeltemperaturbereich von wenigen Grad Celsius, in dem der Beutel gesiegelt werden kann. Wird hierbei zur Steigerung der Leistung bzw. Verkürzung der Siegelzeiten oder zur Verbesserung der Siegelung die Siegeltemperatur etwas zu hoch eingestellt, so kommt es zu einem irreparablen Schmelzen der Folie und einer undichten Siegelnaht und somit zu einem nicht ordnungsgemäß verpackten Produkt, das aussortiert werden muss.

Ein weiteres Problem stellen Ablagerungen wie z.B. Produktanteile einer Marinade im Bereich der Siegelnaht dar, die durch den Einfüllvorgang des Produktes an den Beutelinnenseiten vorhanden sind. Beispielsweise kann es sich um eine in Wasser gelöste Kräutermischung handeln. Kleine Bestandteile der Kräuter, die sich im Bereich der zu erzeugenden Siegelnaht befinden, werden innerhalb der Siegelnaht von beiden Folienseiten eingeschlossen. Sie können dabei trotzdem eine dichte Siegelnaht und einen sicher verschlossenen Beutel gestatten. Der Anteil von Feuchtigkeit oder Wasserpartikeln führt aber bei üblichen Siegeltemperaturen zu einer Volumenvergrößerung der Wasserpartikel und somit zu einer nicht ausreichenden Siegelung, da die Siegelnaht zum Einen nicht durchgehend geschlossen ist oder es zum Anderen durch Bläschenbildung zur Schwächung der Siegelnaht und durch den Einschluss der Bläschen zu lokalen Undichtigkeiten kommt.

Aufgabe der vorliegenden Erfindung ist es, ein Verfahren zum Versiegeln von Verpackungsmaterial zur Verfügung zu stellen, bei dem die vorstehend beschriebenen Nachteile beseitigt werden können.

Diese Aufgabe wird gelöst durch ein Verfahren nach Anspruch 1 bzw. durch eine Kammermaschine oder Kammerbandmaschine nach Anspruch 10 zur Durchführung des Verfahrens. Vorteilhafte Weiterbildungen der Erfindung sind in den Unteransprüchen angegeben.

Bei einem erfindungsgemäßen Verfahren zum Verschließen von Verpackungsmaterial in einer Verpackungsmaschine sind folgende Schritte vorgesehen.

Wenigstens eine Siegelschiene wird vor oder während des Erzeugens eines Kontaktes mit dem Verpackungsmaterial auf eine erste Temperatur erwärmt. Diese erste Temperatur ist niedriger als eine Siegeltemperatur und größer als eine Temperatur, bei der sich flüssige Produktanteile wenigstens teilweise auflösen, um ein Entweichen der Produktanteile aus einem Bereich zu ermöglichen, in dem die Verpackungsmaterialien miteinander versiegelt werden. Die erste Temperatur wird über eine definierte Haltezeit gehalten.

Die Temperatur wenigstens einer Siegelschiene wird auf eine Siegeltemperatur erhöht und solange gehalten, bis das Versiegeln der Verpackungsmaterialien erfolgt ist.

Besonders vorteilhaft wirkt sich das Verfahren auf Verpackungen aus, bei denen ein Produkt, das beispielsweise mit einer wasserhaltigen Marinade äußerlich behandelt worden ist, von einem Verpackungsmaterial umschlossen, bevorzugt in einen Beutel eingeführt wird und das Verpackungsmaterial bzw. der siegelfähige Beutel eine besondere Eignung bzw. bestimmungsgemäße Verwendung durch einen Endverbraucher aufweist. Beispielsweise kann später der Beutel mit dem Produkt in einem Ofen oder in siedendem Wasser einer hohen Temperatur ausgesetzt werden und damit muss das Material der Verpackung eine sehr hohe notwendige Temperaturbeständigkeit bis beispielsweise 250 °C haben. Solche Kunststoffbeutel bestehen aus Kostengründen bevorzugt aus einem Monomaterial wie Polyamid oder Nylon

Das erfindungsgemäße Verfahren ist aber auch für alle anderen, gängigen Verpackungsmaterialien geeignet, um Produktanteile aus dem Bereich der Siegelung entweichen zu lassen.

Bei wasserhaltigen Produktanteilen entspricht bevorzugt die erste Temperatur einer Temperatur oberhalb von 40 °C, vorzugsweise entspricht die Temperatur der Verdampfungstemperatur von Wasser oder sie liegt in einem Temperaturbereich von 40 °C bis 220 °C.

Eine bevorzugte Ausführung des Verfahrens sieht vor, dass ein erster Druck, der relativ beim Zusammendrücken zwischen der Siegelschiene und einer Gegendruckleiste oder einer weiteren Siegelschiene wirkt, kleiner ist als ein zweiter Druck während des Siegelvorganges. Damit wird das Einbringen der Wärme von der Siegelschiene in das Verpackungsmaterial und die Möglichkeit zum Entweichen der Produktanteile aus dem Bereich der Siegelung optimiert.

Das Verpackungsmaterial kann vorzugsweise eine Kunststofffolie oder ein Kunststoffverbundmaterial vorzugsweise in Form eines Beutels sein.

Bevorzugt kann das Verpackungsmaterial eine Temperaturbeständigkeit aufweisen, vorzugsweise zum Garen, Kochen oder Braten des Produktes, bevorzugt in einem Bereich von 120 °C bis 250 °C.

Vorzugsweise liegt die Siegeltemperatur höher als 250 °C, somit bleibt die Siegelnaht während des Garens, Kochens oder Bratens geschlossen. Zum Dampfaustritt und Druckausgleich eines auftretenden Innendrucks werden üblicherweise durch einen Endverbraucher beispielsweise mit einer Gabel oder einem Messer kleine Löcher das Verpackungsmaterial bzw. in den Beutel gestochen.

Um die Prozesszeit für den Verpackungsvorgang zu verkürzen, kann bevorzugt wenigstens eine Siegelschiene vor dem Zusammendrücken an die Gegendruckleiste oder an die weitere Siegelschiene auf eine Vorwärmtemperatur erwärmt werden, um die Aufwärmzeit auf die erste Temperatur zu verkürzen.

Die Prozesszeit kann vorzugsweise auch oder zusätzlich durch eine aktive Kühlung auf eine Abkühltemperatur gebracht werden, bei der sich die Siegelschiene von der Gegendruckleiste oder der gegenüberliegenden weiteren Siegelschiene noch nicht sofort entfernt, sondern erst nachdem sich die Siegelnaht verfestigt hat.

Vor dem Siegeln kann auch dem Evakuiervorgang eine Begasung folgen, um eine modifizierte Atmosphäre zu erzeugen, oder eine Dampfspülung anstatt einer Evakuierung.

Eine erfindungsgemäße Kammermaschine oder Kammerbandmaschine zur Durchführung des erfindungsgemäßen Verfahrens umfasst eine Steuerung, die dazu eingerichtet ist, den zeitlichen Verlauf der ersten Temperatur und der Siegeltemperatur wenigstens einer Siegelschiene und den Druck der Siegelschiene an die Gegendruckleiste oder die weitere Siegelschiene sowie die erste Zeit und die Siegelzeit zu regeln oder zu steuern.

Vorzugsweise regelt die Steuerung die Temperaturen von wenigstens zwei das Verpackungsmaterial einschließenden Siegelschienen, um einen optimierten Wärmeübertrag von den Siegelschienen in das Verpackungsmaterial zu gewährleisten und um den gesamten Verpackungsprozess zu optimieren.

Bevorzugt umfasst die Steuerung eine Eingabeeinrichtung, an der ein Bediener die für einen Ablauf benötigten Werte wie Temperatur, Druck und deren zeitlichen Verlauf vorgeben kann.

Das Verfahren ist auch bei Verpackungsprozessen anwendbar, um Produktanteile wie Soßen, Fleischsaft und andere Flüssigkeiten vor dem Siegelvorgang im Siegelbereich so zu erwärmen, dass diese ihren Aggregatzustand ändern und/oder durch die Temperaturänderung aus dem Siegelbereich entweichen, oder sie sich durch den Druck der Folieninnenseiten des Verpackungsmaterials auf die Produktanteile entfernen lassen.

Im Folgenden wird ein vorteilhaftes Ausführungsbeispiel der Erfindung anhand einer Zeichnung näher dargestellt.
Figur 1 zeigt eine schematische Ansicht einer Kammerbandmaschine,
Figur 2a zeigt eine schematische Ansicht des Inneren einer Kammerbandmaschine mit einer Siegelschiene in einer geöffneten Stellung,
Figur 2b zeigt eine schematische Ansicht des Inneren einer Kammerbandmaschine mit einer Siegelschiene in einer geschlossenen Stellung,
Figur 3a zeigt eine schematische Ansicht des Inneren einer Kammerbandmaschine mit zwei gegenüberliegenden Siegelschienen in einer geöffneten Stellung,
Figur 3b zeigt eine schematische Ansicht des Inneren einer Kammerbandmaschine mit zwei gegenüberliegenden Siegelschienen in einer geschlossenen Stellung,
Figur 4 zeigt ein Zeit-Temperatur- und Zeit-Druck-Diagramm nach einem erfindungsgemäßen Verfahren,
Figur 5 zeigt ein Zeit-Temperatur- und Zeit-Druck-Diagramm in einer Variante,
Figur 6 zeigt ein Zeit-Temperatur- und Zeit-Druck-Diagramm in einer weiteren Variante.

Gleiche Komponenten sind in den Figuren durchgängig mit gleichen Bezugszeichen versehen.

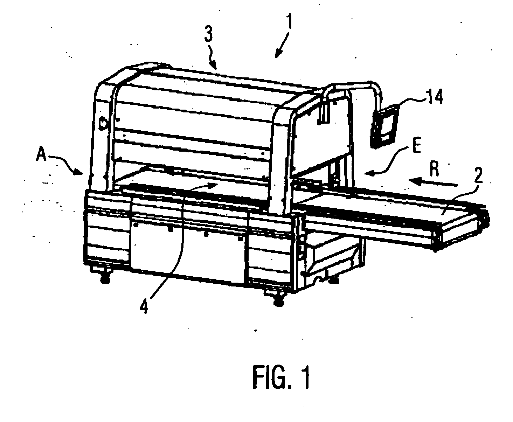

Figur 1 zeigt ein Ausführungsbeispiel einer Kammerbandmaschine 1 mit einem Zuführband 2, auf dem nicht dargestellte Beutel, mit Produkten gefüllt, abgelegt werden. Die Kammerbandmaschine hat eine Transportrichtung R, eine Einführseite E und eine Ausführseite A. Ein Kammeroberteil 3 bildet in seiner nicht dargestellten, absenkten Stellung mit einem Maschinentisch 4 eine geschlossene Kammer, die evakuierbar ist. Eine Steuerung 14 steuert die Prozesse der Kammerbandmaschine 1, zeigt einem Bedienpersonal Betriebsinformationen an und dient zur Eingabemöglichkeit für das Bedienpersonal.

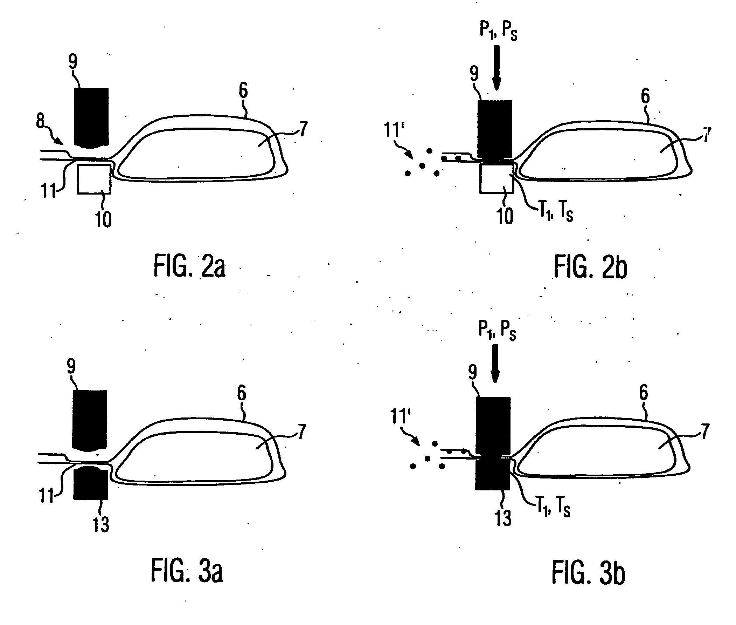

Figur 2a zeigt einen Beutel 6 und ein Produkt 7. Das Produkt 7 im Beutel 6 wird in eine Kammermaschine eingelegt oder mehrere Beutel werden einer Kammerbandmaschine 1 über das Zuführband 2 zugeführt. Anschließend wird die Kammer geschlossen und im Inneren der Kammer ein Vakuum erzeugt, um den Beutel 6 zu evakuieren. Dabei befindet sich ein Beutelhals 8 zwischen einer Siegelschiene 9 und einer Gegendruckleiste 10. Während des Evakuiervorganges der Kammer befindet sich die Siegelschiene 9 in einer geöffneten Stellung, so dass auch das Innere des Beutels 6 evakuiert wird. Sobald die Evakuierung abgeschlossen ist, indem ein durch das Bedienpersonal eingestellter Vakuumwert erreicht ist, wird, wie in Figur 2b dargestellt, die Siegelschiene 9 gegen die Gegendruckleiste 10 bewegt und ein Anpressdruck P₁ erzeugt, damit die Siegelschiene 9 mit dem Beutel 6 in Kontakt steht und die Wärme von der Siegelschiene 9 auf den Beutel 6 übertragen wird. Die Erwärmung der Siegelschiene 9 wird mittels elektrischer Widerstandsheizelemente, beispielsweise Siegeldrähten, ausgeführt. Die Siegelschiene 9 wird vor oder während des Kontaktes mit dem Beutelhals 8 auf eine erste Temperatur T₁ erwärmt Durch die Erwärmung der Produktreste 11 im Bereich 12 der Siegelnaht auf die erste Temperatur T₁ verdampft der flüssige Anteil 11' von Produktanteilen 11 und entweicht aus dem Bereich 12. Diese erste Temperatur T₁ ist niedriger als eine Siegeltemperatur Ts des Verpackungsmaterials, um ein vorzeitiges Siegeln zu verhindern. Für die anschließende Siegelung wird die Temperatur der Siegelschiene 9 auf die Siegeltemperatur Ts erhöht und auch ein Siegeldruck Ps zwischen der Siegelschiene 9 und der Gegendruckleiste 10 während einer definierten Zeit erzeugt.

Es ist auch denkbar, dass der Anpressdruck P₁ von Anfang an der Siegeldruck Ps ist.

Figur 3a bzw. 3b stellen eine Variante von Figur 2a bzw. 2b dar, bei der anstatt der nicht beheizten Gegendruckleiste 10 eine weitere beheizbare Siegelschiene 13 vorhanden ist. Nach Erzeugen des Anpressdrucks P₁ der Siegelschiene 9 an die Siegelschiene 13 wird die Wärme von den auf die erste Temperatur T₁ erwärmten Siegelschienen 9 und 13 von beiden Seiten auf den Beutel 6 übertragen. Dies bewirkt einen effizienten und schnellen Wärmeübertrag auf den Beutel 6. Die Zeit für diesen Vorgang bzw. das Halten der Temperatur in den Siegelschienen 9 und 13 auf der ersten Temperatur T₁ ist vom Bedienpersonal einstellbar und wird über die Steuerung 14 geregelt.

Die Erhöhung der Temperatur der Siegelschienen von der ersten Temperatur T₁ auf die Siegeltemperatur Ts kann vor, gleichzeitig oder nach der Druckerhöhung von dem Anpressdruck P₁ auf den höheren Siegeldruck Ps ausgeführt werden.

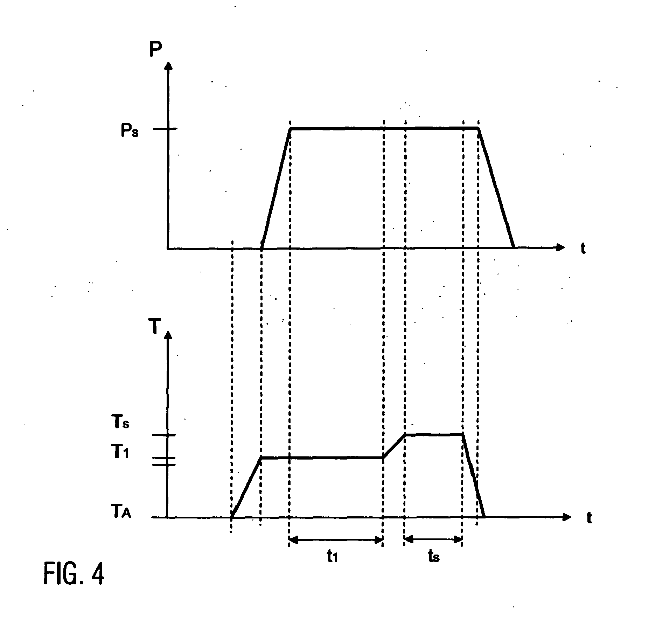

In Figur 4 ist ein t-P- (Zeit-Druck) und t-T-(Zeit-Temperatur)-Diagramm dargestellt, das sich auf die Ausführung der Figuren 2a und 2b bzw. 3a und 3b bezieht.

Das erfindungsgemäße Verfahren sieht in einer Variante vor, dass die Siegelschienen 9 und 13 den Beutel 6 zusammendrücken und eine erste Temperatur T₁ durch den Kontakt mit dem Beutel 6 auf diesen während der (Halte-)Zeit t₁ übertragen wird. Die Temperatur T₁ liegt über oder ist gleich einer Produkttemperatur Tp, die mindestens erreicht werden muss, um den Aggregatzustand der Produktanteile 11 zu verändern. Dies wird vorzugsweise solange ausgeführt, bis die Produktanteile 11, 11' in einem für die Versiegelung ausreichendem Maße aus dem Bereich 12 der noch zu erzeugenden Siegelnaht entwichen sind. Für die Siegelung wird die Temperatur der Siegelschienen 9 und 13 auf die Temperatur Ts erhöht und über die Zeit ts gehalten. Danach werden die Siegelschienen 9, 13 abgekühlt auf eine Anfangstemperatur T_{A}, die der Umgebungstemperatur entspricht. Die Siegelschienen 9, 13 werden dabei mittels Kühlwasser, das in Kühlbohrungen in den Siegelschienen 9, 13 läuft, gekühlt. Dabei werden die Siegelschienen 9 und 13 erst voneinander weg bewegt, nachdem sich die Temperatur verringert hat und ein Abkühlen und damit Aushärten der Siegelnaht stattgefunden hat. Damit wird die Gefahr des Verklebens der Siegelnaht an den Siegelschienen 9, 13 verringert.

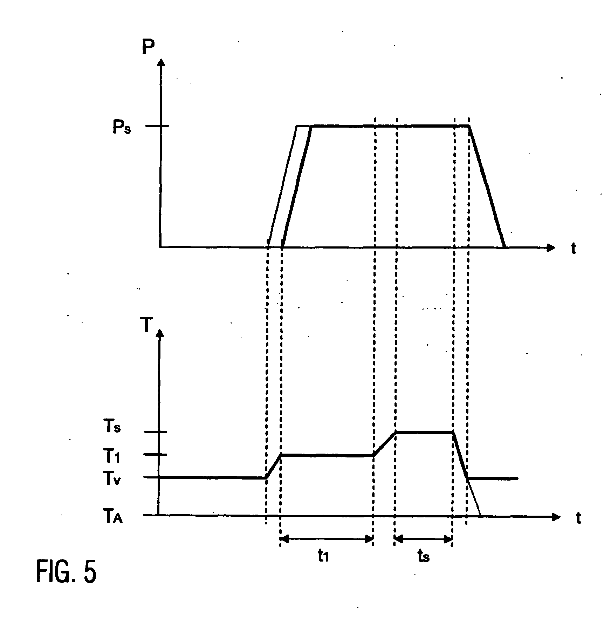

Im Diagramm von Figur 5 ist bezüglich einer zweiten Variante dargestellt, dass die Siegelschienen 9, 13 bereits vor dem Zusammenfahren der Siegelschienen 9, 13 auf eine Vorwärmtemperatur Tv erwärmt sind, um schnell die erste Temperatur T₁ zu erreichen. In Folge werden die Siegelschienen 9, 13 in Kontakt mit dem Verpackungsmaterial gebracht und ein Anpressdruck Ps aufgebaut. Die Abkühlung erfolgt nach dem Siegelvorgang auf die Vorwärmtemperatur Tv oder auf eine Abkühltemperatur TA, die der Umgebungstemperatur entsprechen kann. Die Temperaturerhöhung von Tv auf T1 kann auch zeitgleich oder zeitlich teilweise überschneidend mit der Druckerhöhung auf Ps erfolgen.

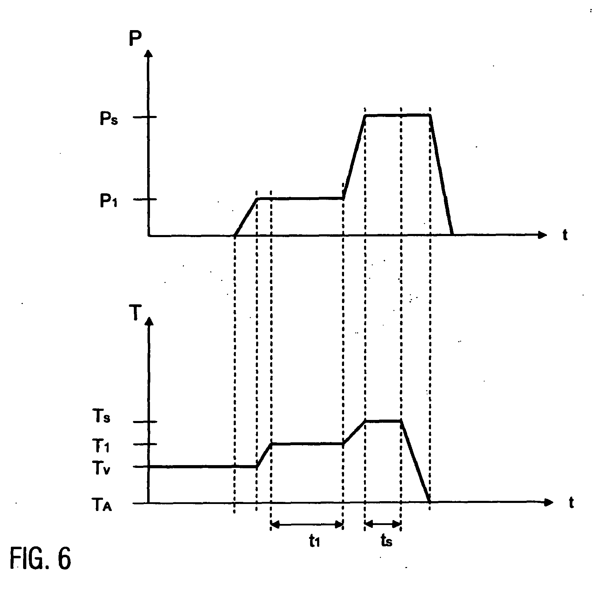

Der Ablauf des Verfahrens in einer weiteren Variante ist in Figur 6 dargestellt. Dabei wird ein Anpressdruck P₁ für das Verdrängen der Produkanteile 11, 11' eingestellt. Dieser Anpressdruck P₁ kann während der Zeit t1 wirken, aber auch bereits zuvor oder nach der Erwärmung der Siegelschienen 9, 13 auf die erste Temperatur T1. Die Erhöhung des Anpressdrucks P₁ auf den Siegeldruck Ps kann gleichzeitig mit der Temperaturerhöhung auf Ts ausgeführt werden, es sind aber weitere nicht dargestellte Varianten denkbar, bei denen die Druckerhöhung erst nach oder bereits vor der Temperaturerhöhung von der ersten Temperatur T₁ auf die Siegeltemperatur Ts erfolgt.

Das Abkühlen erfolgt auf eine Abkühltemperatur TA_{,} die vorzugsweise der Umgebungstemperatur entspricht bzw. die sich durch die aktive Kühlung der Siegelschienen 9, 13 einstellt. Zu Beginn eines neuen Verpackungsprozesses wird die Siegelschiene 9, 13 auf die Vorwärmtemperatur Tv erwärmt.

Das erfindungsgemäße Verfahren ist nicht auf die bisher beschriebenen Abläufe beschränkt. Die Druckerhöhung auf den Anpressdruck Ps bzw. P₁ kann auch vor, während und nach dem Aufheizen der Schiegelschienen 9, 13 auf T₁ bzw. Ts erfolgen. Die Vorwärmtemperatur Tv kann auch zu Beginn des Verpackungsprozesses gleich der ersten Temperatur T₁ sein.

In einer bevorzugten Variante erfolgt die Temperaturregelung der Siegelschienen 9 und 13 über die Steuerung 14 in gleicher Form, um die Wirkung während des Verpackungsprozesses zu verbessern und zu beschleunigen, welches zu einer Leistungserhöhung der Verpackungsmaschine führt.

## Patentansprüche

1. Verfahren zum Versiegeln von Verpackungsmaterial (6) in einer Verpackungsmaschine, vorzugsweise einer Kammermaschine oder Kammerbandmaschine (1), mit folgenden Schritten:
Erwärmen wenigstens einer Siegelschiene (9) vor oder während des Erzeugens eines Kontaktes mit dem Verpackungsmaterial (6) auf eine erste Temperatur (T₁), die niedriger als eine Siegeltemperatur (Ts) und größer einer Temperatur (Tp) ist, bei der sich flüssige Produktanteile (11) wenigstens teilweise auflösen, um ein Entweichen der Produktanteile (11) aus einem Bereich (12) zu ermöglichen, in dem die Verpackungsmaterialien (6) miteinander versiegelt werden, und Halten dieser ersten Temperatur (T1) für eine definierte Haltezeit (t1),
Erhöhen der Temperatur wenigstens einer Siegelschiene (9) auf die Siegeltemperatur (Ts) und Halten dieser Siegeltemperatur (Ts) so lange, bis das Versiegeln der Verpackungsmaterialien (6) erfolgt ist.

2. Verfahren nach Anspruch 1, **dadurch gekennzeichnet, dass** die Temperatur (Tp) oberhalb von 40 °C liegt, vorzugsweise der Verdampfungstemperatur von Wasser entspricht.

3. Verfahren nach einem der vorangehenden Ansprüche, **dadurch gekennzeichnet, dass** ein erster Anpressdruck (P₁), der relativ beim Zusammendrücken zwischen der Siegelschiene (9) und einer Gegendruckleiste (10) oder einer weiteren Siegelschiene (13) wirkt, kleiner ist als ein Siegeldruck (Ps) während des Siegelvorganges in einer Siegelzeit (ts).

4. Verfahren nach einem der vorangehenden Ansprüche, **dadurch gekennzeichnet, dass** das Verpackungsmaterial (6) eine Kunststofffolie oder ein Kunststoffverbundmaterial ist und vorzugsweise ein Beutel ist.

5. Verfahren nach einem der vorangehenden Ansprüche, **dadurch gekennzeichnet, dass** das Verpackungsmaterial (6) eine Temperaturbeständigkeit zum Garen, Kochen oder Braten eines Produktes (7) aufweist, bevorzugt in einem Temperaturbereich von 120 °C bis 250 °C.

6. Verfahren nach einem der vorangehenden Ansprüche, d**adurch gekennzeichnet, dass** die Siegeltemperatur (Ts) höher als 250 °C ist.

7. Verfahren nach einem der vorangehenden Ansprüche, **dadurch gekennzeichnet, dass** wenigstens eine Siegelschiene (9) vor dem Zusammendrücken an die Gegendruckleiste (10) oder eine weitere Siegelschiene (13) auf eine Vorwärmtemperatur (Tv) erwärmt wird.

8. Verfahren nach einem der vorangehenden Ansprüche, **dadurch gekennzeichnet, dass** nach dem Versiegeln wenigstens eine Siegelschiene (9, 13) aktiv auf eine Abkühltemperatur (TA) gebracht wird.

9. Verfahren nach einem der vorangehenden Ansprüche, **dadurch gekennzeichnet, dass** einem Evakuiervorgang noch ein Gasaustausch folgt.

10. Kammermaschine oder Kammerbandmaschine (1) zur Durchführung des Verfahrens nach einem der vorangehenden Ansprüche, wobei die Kammermaschine oder die Kammerbandmaschine (1) eine Steuerung (14) aufweist, **dadurch gekennzeichnet, dass** die Steuerung (14) dazu eingerichtet ist, den zeitlichen Verlauf der ersten Temperatur (T1) und der Siegeltemperatur (Ts) wenigstens einer Siegelschiene (9, 13) und den Anpressdruck (P1, Ps) der Siegelschiene (9) gegen eine Gegendruckleiste (10) oder gegen eine weitere Siegelschiene (13) sowie eine Haltezeit (t1) zum Halten der ersten Temperatur (T1) und eine Siegelzeit (ts) zu regeln.

11. Kammermaschine oder Kammerbandmaschine nach Anspruch 9, **dadurch gekennzeichnet, dass** die Steuerung (14) dazu ausgelegt ist, die Temperaturen von wenigstens zwei das Verpackungsmaterial (6) einschließenden Siegelschienen (9, 13) zu regeln oder zu steuern.

12. Kammermaschine oder Kammerbandmaschine nach Anspruch 9, **dadurch gekennzeichnet, dass** die Steuerung (14) eine Eingabeeinrichtung umfasst, an der ein Bedienpersonal die für einen Versiegelungsvorgang benötigten Werte wie Temperatur, Druck und Zeit vorgeben kann.
